# FASCICULE DE BREVET EUROPEEN

(11) **EP 3 519 166 B1**
(45) Date de publication et mention de la délivrance du brevet: **21.08.2024**
(21) Numéro de dépôt: 17791121.1
(22) Date de dépôt: 22.09.2017
(51) Int. Cl.: B29C 70/38, B29C 70/08, B29C 70/24, B29B 11/16

(54) **PROCÉDÉ DE RÉALISATION DE PIÈCES EN MATÉRIAU COMPOSITE PAR IMPRÉGNATION D'UNE PRÉFORME PARTICULIÈRE**
VERFAHREN ZUR HERSTELLUNG VON VERBUNDSTOFFMATERIALTEILEN DURCH IMPRÄGNIERUNG EINER SPEZIFISCHEN VORFORM
METHOD FOR PRODUCING COMPOSITE MATERIAL PARTS BY IMPREGNATING A SPECIFIC PREFORM

(30) Priorité: 27.09.2016 FR 1670556
(43) Date de publication de la demande: 07.08.2019
(73) Titulaire: Coriolis Group, 56530 Quéven (FR)
(72) Inventeur: HAMLYN, Alexander, 56270 Ploemeur (FR); JOB, Sophie, 56690 Nostang (FR)
(86) Numéro de dépôt international: PCT/FR2017/000176
(87) Numéro de publication internationale: WO 2018/060559

(56) Documents cités:
- EP-A1- 0 546 001
- EP-A1- 0 555 134
- EP-A2- 0 695 823
- US-A1- 2016 059 498
- US-B1- 6 995 099

## Description

La présente invention concerne un procédé de réalisation de pièces en matériau composite à matrice organique, appelée également matériau composite à matrice polymère, comprenant des fibres continues unidirectionnelles et une matrice polymère.

Il est connu des procédés de réalisation d'une pièce en matériau composite à matrice polymère, comprenant une étape de réalisation d'une préforme sèche initiale, et une étape d'imprégnation de la préforme sèche avec un polymère d'imprégnation, par exemple par injection et/ou infusion, pour former une pièce en matériau composite, le polymère d'imprégnation constituant la matrice polymère de la pièce en matériau composite.

Les préformes sèches sont classiquement réalisées manuellement à partir de tissus formés par tissage de fibres sèches continues unidirectionnelles, ou à partir de tissus multiaxiaux ou tissus NCF (Non Crimp Fabric) comprenant plusieurs plis superposés de fibres unidirectionnelles continues maintenus ensemble par couture. Ces préformes présentent un coût de fabrication élevé, et les taux de chute lors de la réalisation de pièces à partir de tels tissus préfabriqués s'avèrent importants.

Afin d'automatiser les opérations et limiter le taux de chute, il a été proposé de réaliser des préformes sèches par drapage automatique de fibres unidirectionnelles continues, les préformes résultantes comprenant plusieurs plis superposés de fibres unidirectionnelles continues. Les fibres peuvent par exemple être appliquées au contact, au moyen d'un rouleau, par un procédé de placement de fibres, chaque pli étant formé par drapage sur un moule d'une ou plusieurs bandes jointives, chacune formée d'une ou plusieurs fibres plates, de type ruban, telles que des fibres de carbone constituées d'une multitude de fils ou filaments de carbone. Les préformes sèches comprennent une faible quantité de liant, généralement inférieure à 5 %, permettant de maintenir la cohésion de la préforme. Toutefois, ce type de préforme obtenue par drapage de plis superposés peut présenter une perméabilité et une cohésion entre fibres insuffisantes pour permettre une imprégnation rapide et satisfaisante, notamment dans le cas d'une imprégnation par injection RTM (Resin Transfert Molding) à haute pression et haute température.

Le document US6995099B1 divulgue des plastiques renforcés de fibres formés par l'intégration d'un matériau de renforcement des fibres et d'un tissu non tissé, et présentant une excellente capacité de mise en forme, une résistance aux chocs après moulage, ainsi qu'une excellente fiabilité et un faible coût.

Le but de la présente invention est de proposer un procédé de fabrication de pièces en matériau composite visant à pallier au moins l'un des inconvénients précités.

A cet effet, la présente invention a pour objet un procédé de réalisation d'une pièce en matériau composite à matrice polymère selon la revendication 1, comprenant une étape de réalisation d'une préforme sèche initiale, formée à partir de fibres sèches continues unidirectionnelles, de préférence comprenant plusieurs plis superposés, chacun formé à partir de fibres sèches continues unidirectionnelles, et une étape d'imprégnation de la préforme sèche avec un premier polymère d'imprégnation, par exemple par injection et/ou infusion, pour former une pièce en matériau composite, ledit polymère d'imprégnation constituant la matrice de la pièce en matériau composite, caractérisé en ce qu'il comprend en outre une étape d'application de fibres ou filaments non tissés sur une première face principale de la préforme sèche, et une étape d'aiguilletage desdits filaments au moyen d'un dispositif d'aiguilletage comprenant une pluralité d'aiguilles, chacune munie d'au moins une encoche, de sorte que des filaments soient entraînés par les aiguilles et disposés dans une direction sensiblement perpendiculaire aux fibres continues de la préforme sèche, la préforme sèche renforcée obtenue après l'étape d'aiguilletage étant soumise à ladite étape d'imprégnation.

Les aiguilles sont entraînées dans un mouvement de va-et-vient par un système d'entrainement du dispositif d'aiguilletage, pour traverser la préforme, de préférence de part en part. Lors du mouvement des aiguilles en direction de la préforme, au moins une partie de ces filaments se positionnent dans les encoches des aiguilles et sont entraînés par les aiguilles à travers la préforme. Ces filaments aiguilletés positionnés dans la direction Z, dans l'épaisseur de la préforme, stabilisent la préforme sèche et permettent d'augmenter la cohésion de la préforme sèche pour l'étape ultérieure d'imprégnation, et ainsi d'éviter un délaminage de la préforme lors de l'imprégnation, notamment dans le cas d'injection de polymère d'imprégnation. Par ailleurs, les perforations créées par les aiguilles et les filaments aiguilletés positionnés en Z augmentent la perméabilité en Z de la préforme sèche, dans l'épaisseur de la préforme.

L'imprégnation est ainsi facilitée et peut être effectuée à des cadences élevées, sans zones sèches, et sans détérioration de la préforme. A l'issue de l'étape d'imprégnation, la pièce en matériau composite comprend de préférence au moins 30% en poids de polymère d'imprégnation, et/ou de préférence au moins 35% en volume de polymère d'imprégnation, le polymère d'imprégnation constituant la matrice de la pièce en matériau composite.

De préférence, la pièce en matériau composite selon l'invention comprend au moins 40% en volume de fibres continues unidirectionnelles, de préférence au moins 50% en volume, mieux encore au moins 55% en volume de fibres continues unidirectionnelles.

Lors de l'aiguilletage, les encoches des aiguilles sont remplies par les filaments de sorte que les fibres unidirectionnelles ne sont pas ou peu entraînées ou endommagées par les aiguilles. Dans le cas de préformes présentant des fibres continues avec une orientation principale, les aiguilles sont disposées de sorte que leurs encoches ne puissent emporter les fibres continues de la préforme, les encoches étant de préférence disposées à 90° de l'orientation principale des fibres.

Les fibres continues unidirectionnelles, de préférence appliquées par placement de fibres, sont par exemple des fibres de carbone, des fibres de verre, des fibres synthétiques telles que des fibres d'aramide, des fibres de polyéthylène, et/ou des fibres naturelles, telles que par exemple des fibres de lin.

Le procédé selon l'invention peut avantageusement être utilisé pour la réalisation de pièce en matériau composite, notamment dans le domaine de l'automobile ou l'aéronautique.

Selon un mode de réalisation, les filaments non tissés appliqués lors de l'étape d'application sont formés à partir d'au moins un deuxième polymère, ladite étape d'imprégnation étant effectuée à une température inférieure à la température de fusion, et de préférence supérieure à la température de transition vitreuse dudit deuxième polymère, de sorte que les filaments assurent un bon maintien des fibres de la préforme lors de l'étape d'imprégnation, notamment sa tenue mécanique au délaminage.

La densité d'aiguilletage est définie notamment en fonction de la perméabilité et de la stabilisation recherchées, et du type d'aiguille utilisée. Selon un mode de réalisation, la densité d'aiguilletage lors de l'étape d'aiguilletage est comprise entre 10 et 350 coups/cm². Dans un dispositif d'aiguilletage muni d'aiguilles à fourche selon l'invention, la densité d'aiguilletage est de préférence de 150 à 350 coups/cm², mieux encore de 200 à 300 coups/cm². Dans le cas, non compris dans la portée des revendications, d'un dispositif d'aiguilletage muni d'aiguilles à barbes, comprenant chacune plusieurs encoches, la densité d'aiguilletage est de préférence de 10 à 100 coups/cm², mieux encore de 40 à 60 coups/cm².

La partie travaillante des aiguilles a un diamètre compris entre 0,30 et 0,60 mm, de préférence entre 0,40 et 0,50 mm (jauges de 38 à 42).

La largeur et la profondeur des encoches, sont comprises entre 0,03 et 0,1 mm, de préférence entre 0,04 et 0,06 mm.

La longueur des filaments est définie en fonction de l'épaisseur de la préforme sèche, de préférence de sorte que les filaments aiguilletés traversent la préforme. Par ailleurs, les filaments aiguilletés doivent de préférence être suffisamment longs pour rester entremêlés sur la première face de la préforme, et ainsi assurer une meilleure stabilité de la préforme.

Les filaments appliqués sur la préforme ont une longueur comprise entre 10 et 100 mm, de préférence entre 40 et 60 mm, et un diamètre compris entre 5 et 50 µm, de préférence 10 à 35 µm.

Selon un mode de réalisation, l'aiguilletage est réalisé de sorte que des filaments transférés par les aiguilles dépassent de la deuxième face principale de la préforme qui est opposée à la première face principale sur laquelle les filaments ont été appliqués, sur une longueur comprise entre 1 et 10 mm, de préférence de 2 à 6 mm, certain de ces filaments pouvant former des boucles dépassant de la deuxième face de la préforme.

Selon un autre mode de réalisation, notamment dans le cas d'une préforme d'épaisseur importante, le procédé selon l'invention comprend une étape d'application de filaments non tissés sur la deuxième face principale de la préforme sèche, et une étape d'aiguilletage desdits filaments présents sur ladite deuxième face principale. De préférence, l'aiguilletage des filaments présents sur ladite deuxième face principale et l'aiguilletage des filaments présents sur ladite première face principale sont réalisés simultanément.

Selon l'invention, l'aiguilletage est réalisé au moyen d'aiguilles à fourche, de préférence avec une profondeur de pénétration d'aiguille comprise entre 1 et 10 mm, de préférence entre 2 et 6 mm. L'utilisation d'aiguilles à fourche permet d'obtenir un aiguilletage efficace des filaments, sans détérioration des fibres de la préforme.

Selon l'invention, ladite étape d'application de filaments comprend l'application d'un feutre non tissé formé desdits filaments. Les feutres utilisés peuvent être isotropes, avec des filaments orientés de manière aléatoire, ou des feutres orientés avec des filaments présentant une orientation préférentielle. Dans le cas de feutres orientés, les aiguilles, et plus particulièrement leurs encoches, sont disposées en fonction de l'orientation des filaments de manière à optimiser le taux de prise de filaments par les aiguilles. Dans le cas de préformes présentant des fibres continues avec une orientation principale, le feutre orienté est avantageusement appliqué sur la préforme de sorte que les filaments fassent un angle non nul avec les fibres continues d'orientation principale de la préforme, par exemple un angle de 90°.

Selon l'invention, le feutre présente une masse surfacique de 5 à 100 g/m², et la préforme munie de filaments comprend de 1 à 10% en poids de filaments, de préférence de 2 à 5% en poids de filaments.

Une partie des filaments du feutre est transférée à travers la préforme, les filaments non transférés présents sur la première face principale peuvent être retirés par pelage du feutre ou non.

Selon un mode de réalisation, le reste de feutre est maintenu sur la préforme pour l'étape d'imprégnation, la structure non tissée des feutres augmente la perméabilité de la préforme et permet ainsi de favoriser l'infusion et/ou injection, les feutres conférant un effet drainant, plus particulièrement dans le cas d'une infusion. Les feutres peuvent en outre augmenter la tenue au choc de la préforme et/ou améliorer l'aspect de surface de la préforme.

L'étape d'imprégnation peut par exemple être réalisée selon un procédé d'imprégnation par voie humide, un procédé d'infusion sous vide, un procédé LCM, un procédé RTM, HP-RTM, Gap-RTM ou VARTM. Selon un mode de réalisation, l'étape d'imprégnation consiste en une étape d'injection de la préforme sèche placée dans un moule d'injection, l'injection étant réalisée à une pression d'au moins 10 bars, par exemple de l'ordre de 50 bars.

De préférence, le procédé comprend la réalisation d'une préforme non tissée. Selon un mode de réalisation, le procédé comprend la réalisation d'une préforme sèche initiale, comprenant plusieurs plis superposés, lesdits plis étant formés à partir de fibres sèches continues unidirectionnelles munies d'un liant, ledit liant comprenant un troisième polymère, ladite étape d'imprégnation étant alors de préférence effectuée à une température supérieure à la température de transition vitreuse, et de préférence inférieure à la température de fusion du troisième polymère formant le liant. Les préformes sèches sont obtenues par application de fibres sèches munies d'un liant et/ou par application de fibres sèches sans liant, et application de liant, par exemple par pulvérisation d'un liant liquide et/ou projection d'un liant sous forme de poudre, sur la surface d'application et/ou sur les fibres sèches préalablement drapées. La préforme sèche comprend moins de 10% en poids de liant, de préférence moins de 5% en poids de liant.

Le deuxième et le troisième polymères peuvent être différents ou identiques ou de même famille.

Selon un mode de réalisation, le troisième polymère formant le liant et/ou le deuxième polymère formant les filaments est un polymère thermoplastique, de préférence choisi dans le groupe constitué par les polyamides, notamment les polyamides aromatiques (aramides), polyesters tels que le polyéthylène téréphtalate, polyéthersulfones, polyétheréthercétones, polysulfures de phénylène, polyuréthanes, époxydes, polyoléfines, acide polylactique, polyacryliques, et leurs mélanges. Dans le cas de polymère thermodurcissable, le troisième polymère thermodurcissable et/ou le deuxième polymère thermodurcissable sont par exemple choisis dans le groupe constitué par les époxydes, polyesters, vinylesters, phénoliques, polyimides, bismaléimides, et leurs mélanges. Selon d'autres modes de réalisation, les filaments appliqués sur la préforme sont des filaments de verre, de carbone, ou métallique.

Selon un mode de réalisation, la préforme sèche est obtenue par un procédé de placement de fibres, connu en soi. Selon un mode de réalisation, la réalisation de la préforme sèche comprend la réalisation de plis superposés, par application au contact, au moyen d'un rouleau d'application, de fibres continues unidirectionnelles sur un outillage de drapage, chaque pli étant réalisé par application d'une ou plusieurs bandes selon une orientation sur l'outillage de drapage ou sur des bandes du pli précédent, chaque bande étant formée d'une ou plusieurs fibres.

Le placement de fibres est avantageusement automatisé au moyen d'une tête de placement de fibres, connue en soi, comportant un rouleau de compactage destiné à venir en contact contre l'outillage pour appliquer une bande formée d'une ou plusieurs fibres plates continues, et un système de guidage pour guider la ou les fibres sur ledit rouleau, par déplacement relatif de la tête d'application par rapport à la surface de drapage selon différentes trajectoires. La préforme comprend par exemple de 2 à 100 plis superposés.

Lesdites fibres continues unidirectionnelles se présentent de préférence sous la forme de fibres continues unidirectionnelles plates, classiquement appelées mèches, comprenant une multitude de filaments. Les fibres présentent par exemple des largeurs d'un huitième de pouce, un quart de pouce ou un demi-pouce (1/8", 1/4" ou 1/2"). Dans la présente, le terme « fibres » désigne également des fibres de plus grande largeur, supérieure à 1/2 pouce, classiquement appelée bande dans la technologie du placement.

En variante, les fibres peuvent être fixées sur le moule, par exemple mécaniquement ou par collage, uniquement en début et en fin de trajectoire, le rouleau étant de préférence en contact en début et en fin de trajectoire, et éventuellement à distance de la surface sur le reste de la trajectoire.

Selon d'autre mode de réalisation, l'aiguilletage selon l'invention est utilisé en remplacement de l'opération de couture effectuée lors de la fabrication d'un tissu multiaxial NCF, la préforme sèche comprend alors plusieurs plis superposés, sans liant, l'aiguilletage des filaments appliqués sur la première face principale de la préforme est réalisé en maintenant mécaniquement les fibres des plis de la préforme, par exemple par des systèmes de picots autour desquels les fibres passent.

Le procédé comprend une étape de thermoformage de la préforme sèche renforcée obtenue après l'étape d'aiguilletage, de préférence entre l'outillage de formage mâle et l'outillage de formage femelle d'une presse, pour obtenir une préforme tridimensionnelle, le thermoformage étant réalisé à une température de thermoformage inférieure à la température de fusion du deuxième polymère, et de préférence supérieure à la température de transition vitreuse du deuxième polymère, la préforme tridimensionnelle obtenue après le thermoformage étant soumise à l'étape d'imprégnation. En variante le formage est réalisé au moyen d'une bâche à vide, après positionnement de la préforme sur un outillage de formage.

En l'absence d'aiguilletage, la déformation de la préforme lors du formage s'effectue fibre par fibre. L'opération d'aiguilletage de la préforme selon l'invention préalablement à l'opération de formage permet d'obtenir une déformation homogène de la préforme, du fait du glissement des filaments aiguilletés.

Par ailleurs, les filaments du feutre présents sur chaque face principale de la préforme permettent un glissement de la préforme dans la presse sans adhérence. Les filaments extérieurs stabilisent les surfaces extérieures de la préforme en limitant, voire supprimant, les déformations locales de la préforme et assurent ainsi une déformation homogène des fibres de la préforme. Le procédé selon l'invention permet ainsi de favoriser les mécanismes de glissement entre les outillages de formage et la préforme, et ainsi de limiter, voire supprimer, les défauts de fibres des plis externes des préformes résultant des frictions entre la préforme et les outillages de formage dans les procédés de formage antérieurs.

Le formage est de préférence réalisé à une température de formage inférieure à la température de fusion du troisième polymère formant le liant, et de préférence supérieure à la température de transition vitreuse dudit troisième polymère. Le formage est réalisé à chaud, la préforme initiale étant chauffée à une température de formage avant et/ou pendant le formage afin d'augmenter la formabilité de la préforme. La préforme initiale peut être préchauffée avant le formage par passage dans un four ou tunnel et/ou la préforme peut être chauffée lors du formage par chauffage de l'outillage de formage mâle et/ou l'outillage de formage femelle. De préférence, la préforme est uniquement préchauffée par passage dans four ou tunnel, les outillages de la presse n'étant pas chauffés, simplifiant ainsi les outillages de presse.

La préforme initiale peut être bidimensionnelle, obtenue par drapage sur la surface plane d'un outillage, ou tridimensionnelle, le formage pouvant alors être effectué pour obtenir des pièces tridimensionnelles de forme complexe ne pouvant être obtenues par drapage, notamment par placement de fibres.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique en coupe d'un exemple de pièce tridimensionnelle en matériau composite réalisée selon le procédé selon l'invention ;
- la figure 2 est une vue schématique de côté illustrant l'opération de drapage de la préforme sèche initiale ;
- la figure 3 est une vue schématique de côté illustrant l'opération d'aiguilletage d'un feutre de fibres non tissé appliqué sur la préforme ;
- la figure 4 est une vue schématique d'une aiguille à barbe utilisable dans un dispositif d'aiguilletage non compris dans la portée des revendications, et la figure 5 est une vue agrandie partielle de la figure 4 ;
- la figure 6 est une vue analogue à celle de la figure 5 illustrant une aiguille à fourche utilisable dans le dispositif d'aiguilletage ;
- la figure 7 est une vue partielle schématique en coupe de la préforme après aiguilletage ;
- les figures 8 et 9 sont des vues en coupe de la presse illustrant l'opération de formage de la préforme obtenue après aiguilletage ;
- la figure 10 est une vue schématique en coupe du moule d'injection illustrant l'opération d'injection de la préforme obtenue après thermoformage ;
- la figure 11 est une vue schématique de côté d'un système de drapage et d'aiguilletage selon un premier mode de réalisation ;
- la figure 12 est une vue schématique de côté d'un système de drapage et d'aiguilletage selon un deuxième mode de réalisation, et la figure 13 est une vue agrandie partielle de la figure 12 ;
- la figure 14 est une vue schématique de côté d'un système de drapage et d'aiguilletage selon un troisième mode de réalisation ; et,
- les figures 15 et 16 sont respectivement une vue de dessus et une vue de côté d'un dispositif d'aiguilletage selon une variante de réalisation.

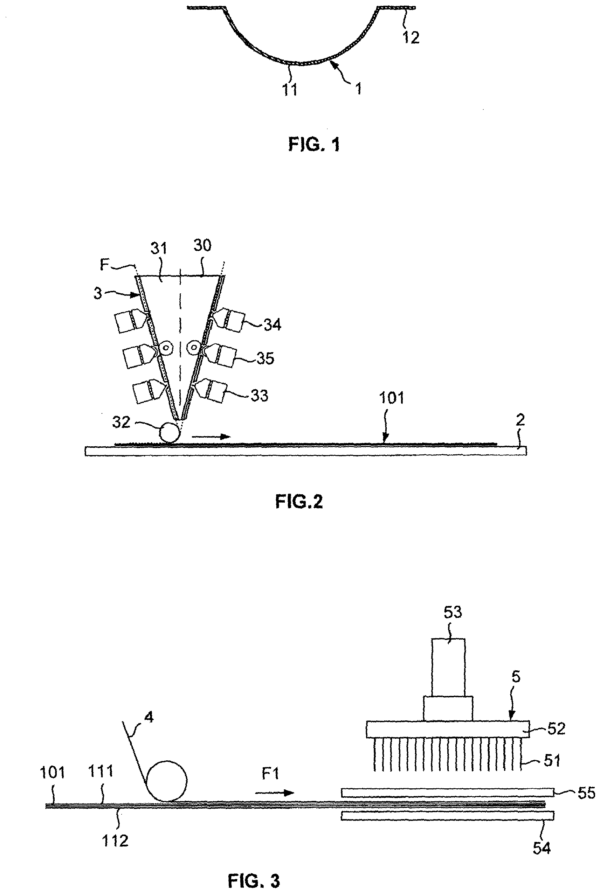

La Figure 1 illustre un exemple de pièce en matériau plastique tridimensionnelle 1 réalisable selon un procédé de l'invention, comprenant le drapage de fibres continues pour former une préforme sèche plane, l'application d'un feutre de fibres non tissé sur la préforme et l'aiguilletage dudit feutre, le formage de la préforme puis son imprégnation. La pièce présente ici la forme d'une calotte sphérique 11 avec un rebord annulaire 12.

Dans une première étape, tel qu'illustré à la figure 2, des plis de fibres unidirectionnelles continues sont drapés à plat sur un outillage de drapage 2 dans des différentes orientations, pour former une plaque ou une préforme sèche 101 initiale bidimensionnelle présentant deux faces principales opposées 111, 112.

Le drapage est effectué au moyen d'un dispositif de drapage 3 comprenant une tête 30 de placement de fibres, connue en soi, permettant le drapage automatique au contact de bandes formées d'une ou plusieurs fibres. Les fibres F entrent dans la tête 3 sous la forme de deux nappes de fibres, et la tête comprend un système de guidage 31 permettant de guider les fibres vers le rouleau de compactage 32 sous la forme d'une bande de fibres dans laquelle les fibres sont disposées côte à côte, par exemple sensiblement bord à bord. La tête comprend, de part et d'autre du système de guidage, des moyens de coupe 33 pour couper individuellement chaque fibre passant dans le système de guidage, des moyens de blocage 34 pour bloquer chaque fibre venant d'être coupée, et des moyens de réacheminement 35 pour entraîner individuellement chaque fibre, ceci afin de pouvoir à tout moment stopper et reprendre l'application d'une fibre, ainsi que choisir la largeur de la bande. Le drapage d'une bande est réalisé par déplacement relatif de la tête par rapport à la surface de drapage sensiblement plane de l'outillage de drapage. La tête comprend par exemple une structure support (non représentée) sur laquelle est monté le système de guidage et par laquelle la tête peut être assemblée à un système de déplacement, apte à déplacer la tête selon au moins deux directions perpendiculaires l'une à l'autre. La tête est par exemple prévue pour recevoir huit fibres, et permettre l'application de bandes de 1 à 8 fibres de 6,35 mm (1/4 de pouce) de large.

La tête est utilisée pour la réalisation d'une préforme sèche, à partir de fibres sèches munies d'un liant classiquement appelé « binder », pour conférer un caractère collant aux fibres lors du drapage et assurer la cohésion de la préforme. Le liant, constitué d'un polymère, peut être appliqué sur les fibres avant le drapage, par exemple sous la forme de voile et/ou de poudre, des bobines de fibres pré-munies de liant étant alors chargées dans la machine de placement de fibre. Le liant peut être appliqué en ligne, lors du drapage des fibres, par exemple directement sur les fibres à draper, par exemple sous forme de filaments, tel que décrit dans la demande de brevet français n°16 70088, déposée le 7 mars 2016 et ayant pour titre « Procédé de réalisation de préformes avec application de liant sur fibre sèche, et machine correspondante ».

Dans le cas notamment de fibres pré-munies de liant, la tête 3 est de préférence équipée d'un système de chauffage (non représenté), par exemple de type lampe IR ou laser, afin de chauffer le liant en cours d'application des fibres, et ainsi permettre au moins une adhésion des fibres des différents plis. Le système de chauffage chauffe les fibres avant leur application sur la surface d'application, ainsi que la surface d'application ou les fibres préalablement déposées, en amont du rouleau par rapport à la direction d'avancement de la tête.

Les fibres sont par exemple des fibres de carbone, plates continues, de type mèches, comprenant une multitude de fils ou filaments de carbone, avec un liant thermoplastique présent en quantité de l'ordre de 2% en poids.

Après réalisation de la préforme sèche 101, un feutre 4 de filaments ou fibres 40 non tissé est appliqué sur une première face principale 111 de la préforme sèche, et la préforme ainsi munie du feutre est soumise à une opération d'aiguilletage, tel qu'illustré schématiquement à la figure 3, par passage dans un dispositif d'aiguilletage ou aiguilleteuse 5.

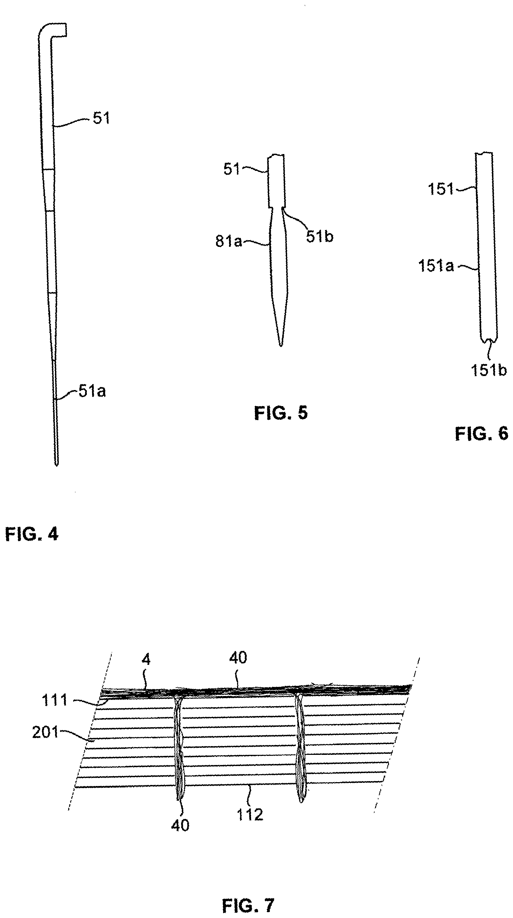

L'aiguilleteuse 5, connue en soi pour consolider des nappes de fibres, comprend une pluralité d'aiguilles 51 montées sur un support 52 ou planche à aiguilles, apte à être animé, par des moyens 53 appropriés, d'un mouvement de va-et-vient dans une direction parallèle aux aiguilles. L'aiguilleteuse comprend une table support 54 ajourée disposée en vis à vis des aiguilles et destinée à supporter la préforme, ainsi qu'un débourreur ou dévêtisseur 55 placé entre la table support et les aiguilles, muni de trous traversant pour le passage des aiguilles. La table support comprend également un ensemble de trous pour permettre le passage des aiguilles après qu'elles aient traversé la préforme. L'aiguilleteuse est, dans un exemple non compris dans la portée des revendications, équipée d'aiguilles 51 dites à barbes, tel qu'illustré aux figures 4 et 5, comprenant le long de sa portion distale ou portion travaillante 51a une ou plusieurs encoches 51b, orientées en direction de l'extrémité de l'aiguille, de sorte que l'aiguille entraine les filaments uniquement lors de la phase de pénétration, soit de haut en bas sur la figure 3. Selon l'invention, l'aiguilleteuse est équipée d'aiguilles 151 dites à fourche, tel qu'illustré à la figure 6, comprenant une ou plusieurs encoches 151b à l'extrémité de sa partie travaillante 151a.

Pendant l'aiguilletage, la préforme est entrainée positivement dans le sens de la flèche référencée F1, et les aiguilles sont entraînées en va et vient. Lors du déplacement des aiguilles vers le bas, des fibres du feutre se positionnent dans les encoches 51b des aiguilles et sont entraînées au travers de toute l'épaisseur de la préforme, les filaments ressortant sur la deuxième face principale 112, tel qu'illustré schématiquement à la figure 7. La densité d'aiguilletage est définie en fonction de la fréquence du mouvement en va-et-vient des aiguilles, le nombre d'aiguilles, et la vitesse d'avancement de la préforme dans l'aiguilleteuse.

Après aiguilletage, le reste du feutre formé par les filaments présents sur la première face qui n'ont pas été aiguilletés, peut être maintenu sur la préforme ou être retiré. Selon un mode de réalisation, la densité d'aiguilletage et la profondeur de pénétration des aiguilles, qui est égale à la distance entre l'extrémité de l'aiguille et la deuxième face principale de la préforme, sont définies de sorte que la préforme présente une quantité de filaments, de préférence similaires, sur chacune de ses faces, ces filaments en surface augmentant la perméabilité de la préforme, et facilitent par ailleurs l'opération de formage.

Selon une variante de réalisation, les filaments ne sont pas appliqués sous la forme d'un feutre, mais projetés de manière aléatoire sur la première face de la préforme.

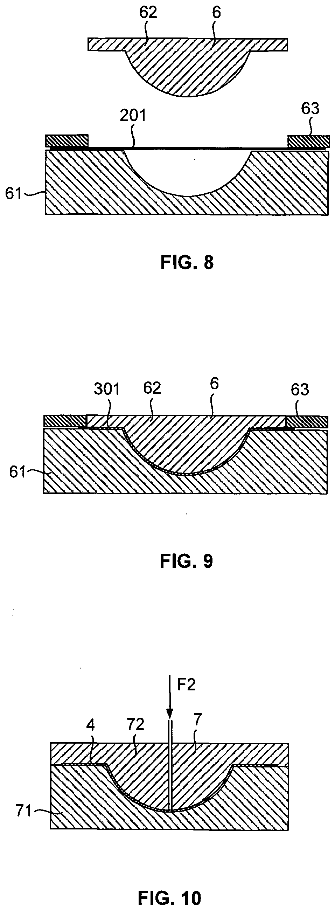

La préforme munie de filaments aiguilletés, appelée préforme renforcée 201, est ensuite transférée vers une presse pour l'opération de formage, également appelée opération d'emboutissage. Tel qu'illustré à la figure 8, la presse 6 comprend un outillage de formage femelle 61 ou matrice, présentant un renfoncement dont la forme correspond à celle de la calotte sphérique 12 de la préforme à réaliser, et un outillage de formage mâle 62, ou poinçon, comprenant un bossage de forme complémentaire. Le formage est réalisé par rapprochement relatif de l'outillage de formage mâle et de l'outillage de formage femelle, d'une position ouverte de la presse illustrée à la figure 4 vers une position fermée de la presse illustrée à la figure 5.

Le formage est réalisé à chaud, la préforme étant à une température de formage comprise entre la température de transition vitreuse et la température de fusion du polymère constituant le liant, et entre la température de transition vitreuse et la température de fusion du polymère formant les filaments du feutre. Cette température de formage de la préforme est obtenue par préchauffage de la préforme avant positionnement dans la presse et/ou par chauffage des deux outillages 61, 62. Ce préchauffage est par exemple réalisé par passage de la préforme initiale entre les rampes de lampe infrarouge supérieure et inférieure d'un four ou tunnel de préchauffage. De préférence, lors du formage, la préforme est maintenue sous tension par un système de mise sous tension, par exemple de type serre-flan, tel que représenté de manière schématique sous la référence 63. Les outillages 61, 62 sont ensuite écartés l'un de l'autre en position ouverte pour pouvoir démouler la préforme renforcée tridimensionnelle 301 de la presse.

La préforme renforcée tridimensionnelle 301 résultante est ensuite soumise à une opération d'ajout ou d'imprégnation d'un polymère d'imprégnation, thermodurcissable ou thermoplastique, par un procédé d'injection et/ou infusion. En référence à la figure 10, la préforme renforcée tridimensionnelle est par exemple placée dans un moule d'injection 7, entre la partie mâle et la partie femelle dudit moule, un polymère d'imprégnation est injecté sous pression dans la préforme, selon un procédé de type RTM (Resin Transfer Moulding), ou Gap-RTM, tel qu'illustré de manière schématique par la flèche référencée F2. La pièce composite 1 obtenue à l'issue de cette étape d'imprégnation peut être soumise à une opération de détourage.

A titre d'exemple, les pièces suivantes ont été réalisées.

### Exemple 1 (non compris dans la portée des revendications)

- Drapage: Drapage d'une préforme par placement de fibres de carbone munies d'un liant appliqué en ligne, formé d'un copolyester thermoplastique ayant un point de fusion de l'ordre de 130°C, et une température de transition vitreuse d'environ 15°C, la préforme étant réalisée en drapant huit plis de fibres dans des orientations différentes, selon l'empilement suivant : +45°/-45°/0°/90°/90°/0°/-45°/+45°.
- Application: Application d'un feutre non tissé en filaments ou fibres polyester de 14µm de diamètre, de 40 à 60 mm de longueur, et un point de fusion d'environ 200°C, ledit feutre, d'orientation isotrope, ayant une masse surfacique de 50 g/m².
- Aiguilletage avec des aiguilles à barbes, de jauge 40 (0,45 mm), présentant une partie travaillante de section triangulaire, avec deux encoches ou barbes par arête, avec une densité d'aiguilletage de 50 coups/cm². Le reste de feutre est maintenu sur la préforme.
- Formage : formage à une température de formage de 120°C
- Injection : injection de type gap-RTM d'un polymère époxy thermodurcissable en un cycle de trois minutes avec une première phase de compression et chauffage à 120°C d'environ 2 minutes, et une seconde phase d'injection et polymérisation à 50 bars, en tirant le vide, d'environ 1 minute.

### Exemple 2 : Les étapes de drapage, formage et injection sont identiques à celles de l'exemple 1.

- Application : Application d'un feutre non tissé en fibres polyacrylonitrile pré-oxydé de 30 µm de diamètre, de 40 à 60 mm de longueur, et un point de fusion supérieur à 200°C, ayant une masse surfacique de 60 g/m², les fibres ayant une orientation sensiblement isotrope.
- Aiguilletage avec des aiguilles à fourche, ayant une partie travaillante de jauge 42 (0,40mm), présentant une encoche ou fourche en extrémité, de 0,05mm de profondeur et 0,05mm de largeur, avec une densité d'aiguilletage de 200 coups/cm² et une profondeur de pénétration de 5 mm. Le reste de feutre est maintenu sur la préforme.

Les deux pièces résultantes ont été injectées uniformément, sans déplacement de fibres et sans zones sèches.

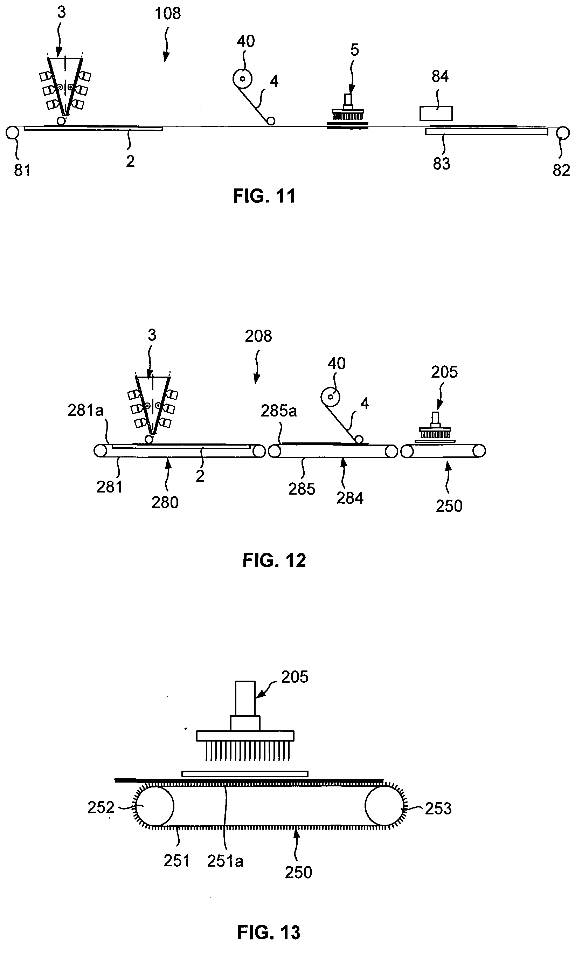

La figure 11 illustre un système 108 de drapage et d'aiguilletage selon l'invention dans lequel le transfert de la préforme du dispositif de drapage 3 vers l'aiguilleteuse 5, ainsi que l'avancée de la préforme lors de l'aiguilletage sont réalisés au moyen d'un film support 80. Un film support est déroulé depuis un rouleau amont 81 passe sur la plaque de drapage 2, entre la table support et le débourreur de l'aiguilleteuse, puis sur une plaque de découpe 83, et est ré-enroulé sur un rouleau aval 82. La préforme est dans un premier temps drapée sur le film support puis est transférée vers l'aiguilleteuse par enroulement du film sur le rouleau aval. Lors de ce transfert, le feutre 4 est déroulé automatiquement depuis une bobine 40 pour être appliqué sur la face supérieure de la préforme. Le feutre et ensuite aiguilleté, le film étant enroulé sur le rouleau aval pour faire avancer progressivement la préforme dans l'aiguilleteuse. La préforme renforcée est ensuite amenée sur la plaque de découpe 83, pour découper, par exemple par un système de découpe ultrason 84, le film autour de la préforme. Le film support peut ensuite être retiré de la préforme ou être maintenu sur celle-ci pour la phase ultérieure d'imprégnation, avec une éventuelle étape de formage intermédiaire. Le drapage s'effectue de préférence avec le film support à l'état stationnaire. La découpe du film d'une préforme peut par exemple être effectuée simultanément au drapage d'une nouvelle préforme.

Les figures 12 et 13 illustrent une variante de réalisation d'un système 208 de drapage et d'aiguilletage, dans lequel la préforme est drapée sur le brin supérieur d'un premier convoyeur à bande 280, transférée sur un deuxième convoyeur à bande 284 pour l'application du feutre, puis transférée sur la table support de l'aiguilleteuse 205 qui est ici formée par le brin supérieur d'un troisième convoyeur à bande 250, qui assure l'avancée de la préforme lors de l'aiguilletage. Le premier convoyeur 280 comprend une bande 281 sans fin montée entre un rouleau amont et un rouleau aval, dont au moins un des deux est motorisé. Le brin supérieur 281a de la bande repose sur la plaque de drapage 2 et la préforme est drapée sur ledit brin supérieur, de préférence lorsque la bande est à l'arrêt. Après drapage de la préforme, le convoyeur est activé pour transférer la préforme sur le brin supérieur 285a de la bande 285 du deuxième convoyeur 284, la bande étant montée entre un rouleau amont et un rouleau aval. Le feutre de filaments non tissé est appliqué sur la face supérieure de la préforme, au fur et à mesure de l'avancée de la préforme sur le deuxième convoyeur, et la préforme munie du feutre est transférée sur le brin supérieur du troisième convoyeur pour l'opération d'aiguilletage. La bande 251 de ce troisième convoyeur est montée également entre un rouleau amont 252 et un rouleau aval 253. Le troisième convoyeur est un convoyeur à brosse, dans lequel la bande présente une pluralité de poils sur lesquels repose la préforme, et dans lesquels les aiguilles pénètrent lors de l'aiguilletage, sur une profondeur de pénétration, définie par exemple entre 2 et 10 mm.

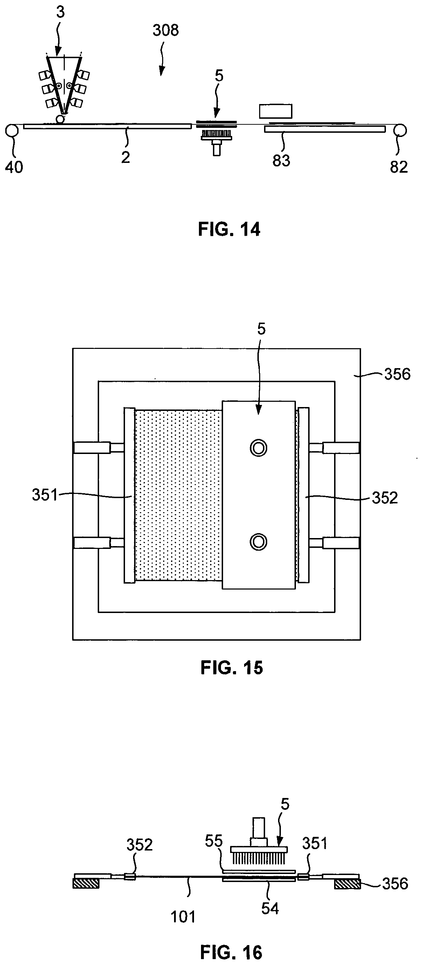

La figure 14 illustre un autre système 308 selon l'invention dans lequel la préforme est drapée sur le feutre de filaments non tissé, ledit feutre étant utilisé pour le transfert de la préforme du dispositif de drapage 3 vers l'aiguilleteuse 5, ainsi pour l'avancée de la préforme lors de l'aiguilletage. Le feutre déroulé depuis une bobine 40 passe sur la plaque de drapage 2, entre la table support et le débourreur de l'aiguilleteuse, puis sur une plaque de découpe 83, et est ré-enroulé sur un rouleau aval 382. Par rapport au mode de réalisation précédent, l'aiguilleteuse est dans une position inversée, de sorte que la planche à aiguilles soit disposée du côté de la préforme munie du feutre. Le feutre est avantageusement un feutre orienté, ledit feutre étant disposé de sorte que les filaments d'orientation principale soient disposés selon la direction d'avancement du feutre afin que ledit feutre présente une bonne tenue mécanique assurant le support et le transfert de la préforme d'un poste à l'autre.

Les figures 15 et 16 illustrent une variante de réalisation dans laquelle la préforme munie du feutre est montée sur un cadre 305 au moyen de pinces, l'opération d'aiguilletage étant réalisé par déplacement en translation du cadre par rapport à une aiguilleteuse 5 par des moyens appropriés. Lors de l'aiguilletage, la préforme est par exemple maintenue entre une pince amont 351 et une pince aval 352, et est positionnée entre le débourreur et la table support de l'aiguilleteuse.

## Revendications

1. Procédé de réalisation d'une pièce en matériau composite comprenant
- une étape de réalisation d'une préforme sèche initiale (101), formée à partir de fibres sèches continues unidirectionnelles,
- une étape d'application d'un feutre (4) non tissé formé de filaments (40) non tissés sur une première face principale (111) de la préforme sèche, le feutre présentant une masse surfacique de 5 à 100 g/m², les filaments non tissés ayant un diamètre compris entre 5 et 50 µm,
- une étape d'aiguilletage desdits filaments au moyen d'un dispositif d'aiguilletage (5, 205, 305) comprenant une pluralité d'aiguilles à fourche (151), chacune munie d'une encoche (151b), de sorte que des filaments soient entraînés par les aiguilles et disposés dans une direction sensiblement perpendiculaire aux fibres continues de la préforme sèche, la partie travaillante des aiguilles à fourche ayant un diamètre compris entre 0,30 et 0,60 mm, l'encoche ayant une largeur et une profondeur comprises entre 0, 03 et 0,1 mm, la densité d'aiguilletage étant comprise entre 150 et 350 coups/cm², et
- une étape de thermoformage de la préforme sèche renforcée obtenue après l'étape d'aiguilletage pour obtenir une préforme tridimensionnelle, et
- une étape d'imprégnation de la préforme sèche tridimensionnelle avec un polymère d'imprégnation, ledit polymère d'imprégnation constituant la matrice de la pièce en matériau composite.

2. Procédé selon la revendication 1, **caractérisé en ce que** les filaments (40) non tissés sont formés d'au moins un deuxième polymère, ladite étape d'imprégnation étant effectuée à une température inférieure à la température de fusion dudit deuxième polymère.

3. Procédé selon la revendication 1 ou 2, **caractérisé en ce que** les filaments (40) non tissés sont formés d'au moins un deuxième polymère, le thermoformage étant réalisé à une température de thermoformage inférieure à la température de fusion du deuxième polymère.

4. Procédé selon l'une des revendications 1 à 3, **caractérisé en ce que** les filaments (40) appliqués sur la préforme ont une longueur comprise entre 10 et 100 mm.

5. Procédé selon l'une des revendications 1 à 4, **caractérisé en ce que** l'aiguilletage est réalisé de sorte que des filaments (40) transférés par les aiguilles dépassent la deuxième face principale (112) de la préforme sur une longueur comprise entre 1 et 10 mm.

6. Procédé selon l'une des revendications 1 à 5, **caractérisé en ce que** l'étape d'imprégnation consiste en une étape d'injection de la préforme sèche placée dans un moule d'injection (7).

7. Procédé selon l'une des revendications 1 à 6, **caractérisé en ce qu'**il comprend la réalisation d'une préforme sèche initiale (101) comprenant plusieurs plis superposés, lesdits plis étant formés à partir de fibres sèches continues unidirectionnelles munies d'un liant, ledit liant comprenant un troisième polymère.

8. Procédé selon la revendication 7, **caractérisé en ce que** la réalisation de la préforme sèche comprend la réalisation de plis superposés, par application au contact, au moyen d'un rouleau d'application (32), de fibres continues unidirectionnelles sur un outillage de drapage (2), chaque pli étant réalisé par application d'une ou plusieurs bandes selon une orientation sur l'outillage de drapage ou sur des bandes du pli précédent, chaque bande étant formée d'une ou plusieurs fibres.

9. Procédé selon l'une des revendications 1 à 8, **caractérisé en ce qu'**il comprend une étape d'application de filaments non tissés sur la deuxième face principale (112) de la préforme sèche, et une étape d'aiguilletage desdits filaments présents sur ladite deuxième face principale.

## Patentansprüche

1. Verfahren zur Herstellung eines Teils aus Verbundstoffmaterial, umfassend
- einen Schritt zur Herstellung einer ursprünglichen trockenen Vorform (101), die aus gleichgerichteten kontinuierlichen trockenen Fasern gebildet wird,
- einen Schritt zum Auftragen von nicht gewebtem Filz (4), der aus nicht gewebten Filamenten (40) gebildet ist, auf einer ersten Hauptfläche (111) der trockenen Vorform, wobei der Filz ein Flächengewicht von 5 bis 100 g/m2 aufweist, wobei die nicht gewebten Filamente einen Durchmesser aufweisen, der zwischen 5 und 50 µm liegt,
- einen Schritt zum Vernadeln der Filamente anhand einer Vernadelungsvorrichtung (5, 205, 305), die eine Vielzahl von Gabelnadeln (151), jeweils mit einer Kerbe (151b) versehen, umfasst, sodass Filamente durch die Nadeln angetrieben, und in einer im Wesentlichen senkrechten Richtung zu den kontinuierlichen Fasern der trockenen Vorform angeordnet werden, wobei der arbeitende Teil der Gabelnadeln einen Durchmesser aufweist, der zwischen 0,30 und 0,60 mm liegt, wobei die Kerbe eine Breite und eine Tiefe aufweist, die zwischen 0,03 und 0,1 mm liegt, wobei die Vernadelungsdichte zwischen 150 und 350 Stichen/cm2 liegt, und
- einen Schritt zum Thermoformen der verstärkten trockenen Vorform, die nach dem Vernadelungsschritt erhalten wird, um eine dreidimensionale Vorform zu erhalten, und
- einen Schritt zum Imprägnieren der dreidimensionalen trockenen Vorform mit einem Imprägnierungspolymer, wobei das Imprägnierungspolymer die Matrix des Teils aus Verbundmaterial darstellt.

2. Verfahren nach Anspruch 1, **dadurch gekennzeichnet, dass** die nicht gewebten Filamente (40) aus mindestens einem zweiten Polymer gebildet sind, wobei der Imprägnierungsschritt bei einer Temperatur unter der Schmelztemperatur des zweiten Polymers durchgeführt wird.

3. Verfahren nach Anspruch 1 oder 2, **dadurch gekennzeichnet, dass** die nicht gewebten Filamente (40) aus mindestens einem zweiten Polymer gebildet sind, wobei das Thermoformen bei einer Thermoformungstemperatur unter der Schmelztemperatur des zweiten Polymers durchgeführt wird.

4. Verfahren nach einem der Ansprüche 1 bis 3, **dadurch gekennzeichnet, dass** die Filamente (40), die auf der Vorform aufgetragen werden, eine Länge aufweisen, die zwischen 10 und 100 mm liegt.

5. Verfahren nach einem der Ansprüche 1 bis 4, **dadurch gekennzeichnet, dass** die Vernadelung derart durchgeführt wird, dass die durch die Nadeln übertragenen Filamente (40) die zweite Hauptfläche (112) der Vorform auf einer Länge überschreiten, die zwischen 1 und 10 mm liegt.

6. Verfahren nach einem der Ansprüche 1 bis 5, **dadurch gekennzeichnet, dass** der Imprägnierungsschritt aus einem Spritzgussschritt der trockenen Vorform besteht, die in einer Spritzgussform (7) platziert ist.

7. Verfahren nach einem der Ansprüche 1 bis 6, **dadurch gekennzeichnet, dass** es die Herstellung einer ursprünglichen trockenen Vorform (101) umfasst, die mehrere überdeckte Falten umfasst, wobei die Falten aus gleichgerichteten kontinuierlichen trockenen Fasern gebildet sind, die mit einem Bindemittel versehen sind, wobei das Bindemittel ein drittes Polymer umfasst.

8. Verfahren nach Anspruch 7, **dadurch gekennzeichnet, dass** die Herstellung der trockenen Vorform die Herstellung von überdeckten Falten durch Auftragen auf Kontakt anhand einer Auftragswalze (32) von gleichgerichteten kontinuierlichen Fasern auf einem Drapierwerkzeug (2) umfasst, wobei jede Falte durch Auftragen eines oder mehrerer Bänder gemäß einer Ausrichtung auf dem Drapierwerkzeug oder auf Bändern der vorherigen Falte hergestellt wird, wobei jedes Band aus einer oder mehreren Fasern gebildet wird.

9. Verfahren nach einem der Ansprüche 1 bis 8, **dadurch gekennzeichnet, dass** es einen Schritt zum Auftragen von nicht gewebten Filamenten auf der zweiten Hauptfläche (112) der trockenen Vorform, und einen Schritt zum Vernadeln der auf der zweiten Hauptfläche vorhandenen Filamente umfasst.

## Claims

1. Method for producing a composite material part comprising
- a step of producing an initial dry preform (101), formed from unidirectional continuous dry fibers,
- a step of applying nonwoven felt (4) formed of non-woven filaments (40) to a first main face (111) of the dry preform, the felt having a surface mass of 5 to 100 g/m², the non-woven filaments having a diameter between 5 and 50 µm,
- a step of needling said filaments by means of a needling device (5, 205, 305) comprising a plurality of forked needles (151), each provided with at least one notch (151b), so that filaments are driven by the needles and arranged in a direction substantially perpendicular to the continuous fibers of the dry preform, the working part of the forked needles having a diameter between 0.30 and 0.60 mm, the notch having a width and a depth between 0.03 and 0.1 mm, the needling density being between 150 and 350 punches/cm², and
- a step of thermoforming the reinforced dry preform obtained after the needling step to obtain a three-dimensional preform, and
- a step of impregnating the three-dimensional dry preform with an impregnation polymer, said impregnation polymer constituting the matrix of the composite material part.

2. Method according to claim 1, **characterized in that** the nonwoven filaments (40) are formed from at least one second polymer, said impregnation step being carried out at a temperature below the melting temperature of said second polymer.

3. Method according to claim 1 or 2, **characterized in that** the nonwoven filaments (40) are formed from at least one second polymer, the thermoforming being carried out at a thermoforming temperature below the melting temperature of the second polymer.

4. Method according to one of claims 1 to 3, **characterized in that** the filaments (40) applied to the preform are of a length of between 10 and 100 mm.

5. Method according to one of claims 1 to 4, **characterized in that** the needling is performed so that filaments (40) transferred by the needles exceed the second main face (112) of the preform over a length of between 1 and 10 mm.

6. Method according to one of claims 1 to 5, **characterized in that** the impregnation step consists of a step of injecting the dry preform placed in an injection mold (7).

7. Method according to one of claims 1 to 6, **characterized in that** it comprises the production of an initial dry preform (101) comprising several superimposed plies, said plies being formed from continuous unidirectional dry fibers provided with a binder, said binder comprising a third polymer.

8. Method according to claim 7, **characterized in that** the production of the dry preform comprises the production of superimposed plies, by contact application, by means of an application roller (32), of continuous unidirectional fibers on a laying up tool (2), each ply being made by application of one or more bands in an orientation on the laying up tool or on bands of the preceding ply, each band being formed of one or several fibers.

9. Method according to one of claims 1 to 8, **characterized in that** it comprises a step of applying non-woven filaments to the second main face (112) of the dry preform, and a step of needling said filaments present on said second main face.
